# EUROPÄISCHE PATENTSCHRIFT

(11) **EP 1 226 293 B1**
(45) Veröffentlichungstag und Bekanntmachung des Hinweises auf die Patenterteilung: **21.01.2004**
(21) Anmeldenummer: 00971268.8
(22) Anmeldetag: 29.09.2000
(51) Int. Cl.: D01F 2/00, C08J 5/18, C08L 1/02

(54) **VERFAHREN UND VORRICHTUNG ZUR REGELUNG DER ZUSAMMENSETZUNG DER CELLULOSEHALTIGEN EXTRUSIONSLÖSUNG BEI DEM LYOCELLPROZESS**
METHOD AND DEVICE FOR CONTROLLING THE COMPOSITION OF THE CELLULOSE CONTAINING EXTRUSION SOLUTION IN THE LYOCELL PROCESS
PROCEDE ET DISPOSITIF POUR REGULER LA COMPOSITION DE SOLUTIONS A EXTRUDER CONTENANT DE LA CELLULOSE LORS DU PROCESSUS LYOCELL

(30) Priorität: 06.10.1999 DE 19947909
(43) Veröffentlichungstag der Anmeldung: 31.07.2002
(73) Patentinhaber: Lurgi Zimmer AG, 60388 Frankfurt am Main (DE)
(72) Erfinder: KIND, Uwe, 07407 Rudolstadt (DE); KAGALOWSKI, Leo, 60322 Frankfurt (DE); BLECH, Marco, 55252 Mainz-Kastel (DE)
(74) Vertreter: Brandenburg, Thomas, Dr.
(86) Internationale Anmeldenummer: PCT/DE2000/003454
(87) Internationale Veröffentlichungsnummer: WO 2001/025517

(56) Entgegenhaltungen:
- EP-A- 0 254 803
- WO-A-94/28212
- WO-A-96/35008

## Beschreibung

Die Erfindung betrifft ein Verfahren zur Regelung der Zusammensetzung der cellulosehaltigen Extrusionslösung bei der Herstellung cellulosischer Formkörper nach dem Lyocellprozess. Die Erfindung betrifft auch eine Vorrichtung zur Regelung der Zusammensetzung der cellulosehaltigen Extrusionslösung bei der Herstellung cellulosischer Formkörper nach dem Lyocellverfahren.

Die Eigenschaften der nach dem Lyocellverfahren hergestellten cellulosischen Formkörper, insbesondere die textilphysikalischen Eigenschaften der ersponnenen Fasern und Filamente, hängen in starkem Maße von der Zusammensetzung der Extrusionslösung (Spinnlösung) ab. Zur Erreichung optimaler Eigenschaften ist es daher erwünscht, die Zusammensetzung der Extrusionslösung zu überwachen und Schwankungen in möglichst engen Grenzen zu halten.

Aus EP-B-0 700 458 ist es bekannt, von Zeit zu Zeit eine Probe der dem Extrusionsapparat zufließenden Spinnlösung zu entnehmen und ihren Brechungsindex zu messen, der bei 60°C in dem Bereich von 1,4890 bis 1,4910 liegen soll, damit zufriedenstellende Extrusionsprodukte erhalten werden. Außer dieser diskontinuierlichen Überwachung ist auch eine kontinuierliche Meßeinrichtung in der Leitung, z.B. ein Prozess-Refraktometer angegeben. Wenn der Brechungsindex der Spinnlösung außerhalb des genannten Bereichs gemessen wird, sollen die Beschickung zu dem Vormischer und/oder die Verdampferbedingungen neu eingestellt werden.

Die Extrusionslösung ist eine ternäre Lösung aus Cellulose, Aminoxid und Wasser. Ihre Zusammensetzung kann nicht durch die Messung nur einer Eigenschaft der Spinnlösung, z.B. des Brechungsindex, genau festgestellt werden, da einem bestimmten Brechungsindex eine Vielzahl von unterschiedlicher Lösungszusammensetzungen innerhalb des Lösungsgebiets des ternären Systems zugeordnet werden kann. Auf Basis einer Brechungsindexmessung kann daher weder die Zusammensetzung der Spinnlösung genau ermittelt werden, noch kann auf dieser Messung eine kontinuierliche Regelung der Zusammensetzung aufgebaut werden. Nach EP-B-0 700 458 wird daher der Brechungsindex der Extrusionslösung auch nur in einem Bereich gehalten, d.h. beträchtliche Schwankungen der Zusammensetzung werden von vornherein toleriert. Eine strikte Regelung der Zusammensetzung zwecks Erreichung einer optimalen und gleichbleibenden Qualität der Extrusionsprodukte ist so nicht möglich.

Der vorliegenden Erfindung liegt die Aufgabe zugrunde, ein Verfahren und eine Vorrichtung zur Regelung der Zusammensetzung der cellulosehaltigen Extrusionslösung beim Lyocellprozess zu schaffen, bei dem die Zusammensetzung der Lösung genau geregelt wird, so daß die für optimale Eigenschaften der Formkörper erforderliche Zusammensetzung der Lösung eingehalten werden kann und darüber hinaus auch Schwankungen der Zusammensetzung minimiert werden können. Insbesondere soll die Zusammensetzung der Spinnlösung kontinuierlich genau festgestellt werden, so daß eine ständige, verzögerungsfreie Nachregelung erfolgen kann und etwa auftretende Abweichungen der Zusammensetzung der Extrusionslösung von einer Soll-Zusammensetzung schnell eliminiert bzw. in engen Grenzen gehalten werden können. Schließlich soll ein Verfahren geschaffen werden, bei dem die Zusammensetzung der Spinnlösung zentral, nämlich in einem Prozessleitsystem anders einstellbar ist, wenn dies gewünscht wird. Weitere Vorteile der Erfindung ergeben sich aus der folgenden Beschreibung.

Die vorliegende Erfindung geht aus von einem Verfahren zur Herstellung cellulosischer Formkörper nach dem Lyocellprozess, bei dem man (a) Cellulose mit einer wässrigen Aminoxidlösung mischt, (b) das Gemisch durch Wasserverdampfung unter Vakuum bei erhöhter Temperatur und Eintragung von Scherenergie in die Extrusionslösung überführt, (c) die Extrusionslösung unter Bildung des cellulosischen Formkörpers extrudiert und in einem Koagulationsbad koaguliert, und (d) den gebildeten Formkörper zur Entfernung restlichen Aminoxids wäscht.

Bei diesem Verfahren wird die Aufgabe erfindungsgemäß dadurch gelöst, daß man in der Stufe (a) das Verhältnis Cellulose/Aminoxid durch eine Vorregelung auf einem vorgegebenen Wert hält und den Wassergehalt der Extrusionslösung nach dem Verlassen der Stufe (b) durch eine Hauptregelung auf einen vorgegebenen Wert einstellt. Durch diese zweistufige Regelung ist es möglich, die Zusammensetzung der Extrusionslösung im kontinuierlichen Betrieb auf das gewünschte Verhältnis zu bringen und auftretende Schwankungen der Zusammensetzung zu minimieren, so daß die für optimale Produkteigenschaften erforderliche Zusammensetzung der Extrusionslösung ständig eingehalten werden kann. Anders als bei dem in EP-B-0 700 458 beschriebenen Verfahren wird durch die Stufenregelung der Erfindung die Lösungszusammensetzung genau auf den Sollwert eingeregelt. In der Vorregelung wird zunächst das in der Extrusionslösung gewünschte Cellulose/Aminoxid-Verhältnis durch die Dosierung beider Komponenten eingestellt. Dieses Verhältnis bleibt auch in der Lösung erhalten. Mit dieser Einstellung wird in dem ternären System praktisch die diesem Verhältnis zugeordnete, funktionelle Beziehung der Dichte der Lösung in Abhängigkeit von ihrem Wassergehalt festgelegt, die auch die Sollzusammensetzung der Extrusionslösung beschreibt. Durch die Hauptregelung wird dann nur noch der Wassergehalt des aus Stufe (a) kommenden Gemisches durch Wasserentfernung auf den Wassergehalt der Soll-Zusammensetzung der Lösung gebracht. Der Kern der Erfindung ist daher die Lehre, daß zunächst das Cellulose/Aminoxid-Verhältnis der Soll-Zusammensetzung der Extrusionslösung einzustellen ist und dann erst in einem separaten Schritt der Wassergehalt der Soll-Zusammensetzung eingestellt wird.

Nach der bevorzugten Ausführungsform des erfindungsgemäßen Verfahrens regelt man den Wassergehalt der Extrusionslösung aufgrund der Messung der Dichte dieser Lösung. In dem Regler der Hauptregelung sind die funktionellen Abhängigkeiten gespeichert, die für die verschiedenen Cellulose/Aminoxid-Verhältnisse den Wassergehalt der Extrusionslösung als Funktion ihrer Dichte angeben. Der Regler der Hauptregelung erhält vom Regler der Vorregelung das Cellulose/Aminoxid-Verhältnis, so daß er die Umrechung von der gemessenen Dichte auf den Wassergehalt entsprechend der für dieses Verhältnis gültigen Funktion vornehmen kann. Vorzugsweise führt man die Dichtemessung der Extrusionslösung in-line zwischen den Stufen (b) und (c) durch.

Nach der bevorzugten Ausführungsform des erfindungsgemäßen Verfahrens regelt man den Wassergehalt der Extrusionslösung durch die Einstellung der Wasserverdampfungsrate der Stufe (b). Die Änderung der Wasserverdampfungsrate führt auf kurzem Weg zur entsprechenden Änderung der Lösungszusammensetzung. Die Hauptregelung arbeitet mit geringer Totzeit im Vergleich zu einem Eingriff an der Dosierung der Komponenten in der Stufe (a). Vorzugsweise wird die Wasserverdampfungsrate durch
die Eintragsgeschwindigkeit der Scherenergie in Stufe (b) eingestellt. Bei der beträchtlichen Viskosität der Extrusionslösung in der Stufe (b) wird die Scherenergie überwiegend in wärme umgewandelt, die zu einer Wasserverdampfung in dieser Stufe führt. Bei einer anderen Ausführungsform wird die Wasserverdampfungsrate durch das Vakuum in der Stufe (b) eingestellt.

Vorzugsweise misst man den Massenstrom und den Wassergehalt der in die Stufe (a) eingeführten Cellulose sowie den Wassergehalt der in die Stufe (a) eingeführten wässrigen Aminoxidlösung und führt den für das vorgegebene Cellulose/Aminoxid-Verhältnis hieraus berechneten Massenstrom der Aminoxidlösung in die Stufe (a) ein. Aufgrund des für die Extrusionslösung vorgegebenen Cellulose/Aminoxid-Verhältnisses, der Wassergehalte der in die Stufe (a) eingespeisten Komponenten und des gemessenen Massestroms der Cellulose regelt der Verhältnisregler den erforderlichen Massenstrom der in die Stufe (a) eingeführten wässrigen Aminoxidlösung. In der Vorregelung erfolgt praktisch eine Verhältnisregelung, wobei der der Stufe (a) zufließende Massenstrom der Aminoxidlösung die Stellgröße darstellt. Dies ist die einfachste Realisierung der Verhältnisregelung. Andere Realisierungen der Verhältnisregelung sind denkbar, z.B. indem der Cellulosestrom als Stellgröße dient.

Zweckmäßigerweise misst man den Wassergehalt der der Stufe (a) zufließenden Aminoxidlösung über ihre Dichte. Dabei kann der Wassergehalt der Aminoxidlösung und/oder des Zellstoffs in-line gemessen werden.

Ferner kann man die in der Stufe (d) anfallende(n) Waschlösung(en) in das Koagulationsbad der Stufe (c) einsetzen und die Konzentration dieser Lösung(en) zwischen der Wäsche und dem Koagulationsbad durch Messung ihrer Dichte regeln. Auf diese Weise erfolgt der Austausch der Waschlösung entsprechend ihrer Aufnahme an Aminoxid.

Ferner ist bei dem ertindungsgemäßen Verfahren, bei dem man wässrige Aminoxidlösung aus dem Koagulationsbad abzieht, reinigt, durch Eindampfen aufkonzentriert und in der Stufe (a) wieder einsetzt, vorgesehen, daß man die Konzentration der aus dem Koagulationsbad abgezogenen Lösung durch die Messung ihrer Dichte regelt. Dadurch wird das Koagulationsbad erst nach Erreichen eines bestimmten Gehalts an Aminoxid der Regenerierung zugeführt. Das bei dem vorliegenden Verfahren bevorzugte Aminoxid ist N-Methylmorpholin-N-oxid.

Zweckmäßigerweise konzentriert man die wässrige Aminoxidlösung aus dem Koagulationsbad durch ein- oder mehrstufige Eindampfung auf auf und regelt die Beheizung der Eindampfstufe(n) über in-line-Messung der Dichte der aus der bzw. den Eindampfstufe(n) ablaufenden Aminoxidlösung(en). So kann man die Aminoxidkonzentration der fertig konzentierten Lösung auf den für das Ansetzen in der Stufe (a) gewünschten Gehalt steigern, der dann in der oben genannten Vorregelung erfaßt wird.

Zweckmäßigerweise hält man in der Extrusionslösung einen Cellulosegehalt zwischen 1 und 15 Gew.-% und ein Gewichtsverhältnis Aminoxid/Wasser zwischen 6 und 15 ein.

Die Erfindung geht ferner aus von einer Vorrichtung zur Regelung der Zusammensetzung der cellulosehaltigen Extrusionslösung bei der Herstellung cellulosischer Formkörper nach dem Lyocellverfahren mit einem Mischaggregat mit einer Beschickungseinrichtung für die Cellulose und einer Beschickungsleitung für wasserhaltiges Aminoxid, einem dem Mischaggregat strömungsmäßig nachgeschalteten Eindampf- und Löseaggregat mit wenigstens einem, mit Drehantrieb verbundenem Scherwerkzeug und einer angeschlossenen Vakuumanlage, einer mit dem Eindampf- und Löseaggregat durch eine Leitung verbundenen Extrusionseinrichtung mit einem Koagulationsbad und wenigstens einem Waschbad und einer in der Leitung angeordneten Einrichtung zur Überwachung der Extrusionslösung.

Die Aufgabe wird bei dieser Vorrichtung erfindungsgemäß gelöst durch einen Vorregelkreis zur Regelung des Cellulose/Aminoxid-Verhältnisses mit einem in der Beschickungsleitung angeordneten Gerät zur Messung der Lösungsdichte und des Massendurchflusses als Fühler und einem in der Beschikkungsleitung angeordneten Ventil als Stellglied, und einen Hauptregelkreis zur Regelung des Wassergehalts der Extrusionslösung in der Leitung zur Extrusionseinrichtung mit einem darin angeordneten Gerät zur Messung der Lösungsdichte als Fühler und einem Drehzahlgeber für den Drehantrieb des Scherwerkzeugs und/oder einem Druckgeber für die Vakuumanlage als Stellglied. Die erfindungsgemäße zweistufige Regelung erlaubt die Bildung einer Extrusionslösung von genau definierter Zusammensetzung mit minimaler Schwankungsbreite. Durch die Vorgabe des Cellulose/Aminoxid-Verhältnisses und des Wassergehalts der Extrusionslösung in der Vor- bzw. Hauptregelung läßt sich die gesamte Regelung in einfacher Weise zentral regeln.

Zweckmäßigerweise ist das Dichte-Meßgerät des Vorregelkreises zugleich Durchflußregler und über Signalleitungen einerseits mit einem Verhältnisregler und andererseits mit dem Ventil verbunden. Hierbei ist vorzugsweise der Verhältnisregler über eine Signalleitung an den Regler des Hauptkreises angeschlossen. Der Regler des Hauptregelkreises kann dann aufgrund des erhaltenen Verhältnissignals die gültige funktionelle Beziehung zwischen der Dichte und dem Wassergehalt der ternären Extrusionslösung für die Dichte/Wassergehalt-Umrechnung heranziehen. Zweckmäßigerweise arbeiten die Geräte zur Messung der Lösungsdichte und des Massendurchflusses nach dem Coriolisprinzip. Sie haben auch eine integrierte Temperaturkompensation für Messungen im Bereich von -10 bis +200°C.

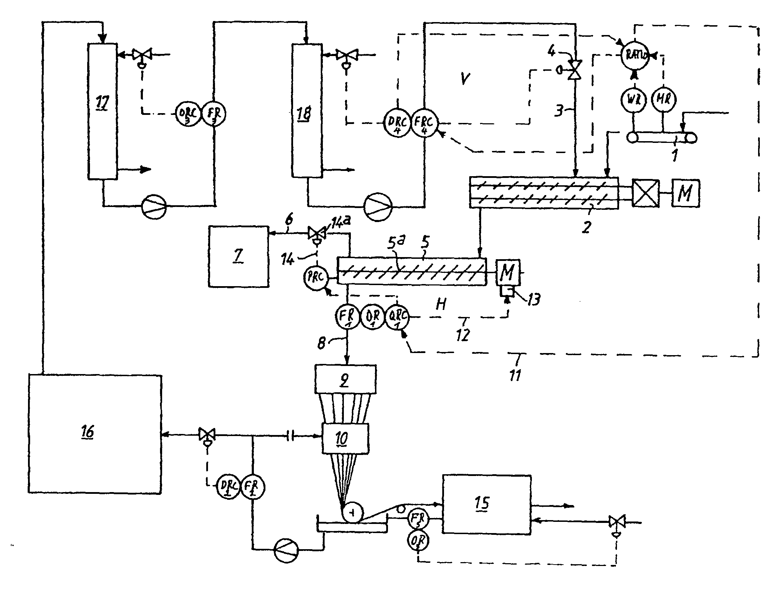

Die Erfindung wird nachfolgend an Hand der Zeichnung näher beschrieben, die ein schematisches Fließbild einer Anlage zur Herstellung der cellulosischen Formkörper nach dem Lyocellverfahren mit der erfindungsgemäßen Regelung zeigt.
Nach der Zeichnung wird über ein Wägeaggregat 1 Zellstoff kontinuierlich in ein Mischaggregat 2 eingetragen. Die Feuchte des Zellstoffs wird ständig in-line mit dem Gerät (MR) gemessen. Desgleichen wird durch die Leitung 3 wässrige Aminoxidlösung abströmseitig der Zellstoffeinspeisung in das Mischaggregat 2 eingeführt. Über den Durchflußregler (FRC4) wird aufgrund der Dichtemessung (DRC4) der Lösungsdurchfluß am Ventil 4 so geregelt, daß Cellulose und Aminoxid in einem an dem Regler (Ratio) vorgegebenen Verhältnis stehen. Der Massestrom des Zellstoffs wird bei (WR) erfaßt, die Feuchte des Zellstoffs wird über die Messung (MR) erfaßt und bei der Regelung des Cellulose/Aminoxid-Verhältnisses ebenfalls berücksichtigt. Durch die Vorregelung in dem Regelkreis V (d.h. (DRC4)-(Ratio)-FRC4-Ventil 4) wird das Mischaggregat 2 in einem konstanten Verhältnis Cellulose/Aminoxid beschickt, das auch in der Extrusionslösung erhalten bleibt. Die Wassergehaltsbestimmungen durch (MR) und (DRC4) in-line sind notwendig für die Regelung des Cellulose/Aminoxid-Verhältnisses. Der Wassergehalt der Aminoxidlösung wird über die Dichte der Lösung bestimmt (DRC4). Bei (DRC4) und (FRC4) handelt es sich um ein einziges Meßgerät, vorzugsweise nach dem Coriolis-Prinzip, das sowohl die Dichte als auch den Massendurchfluß mißt.

Das aus dem Mischaggregat 2 austretende Gemisch aus wässriger Aminoxidlösung und Cellulose wird dem Eindampf- und Löseaggregat 5 zugeführt, das mit wenigstens einem rotierenden Scherwerkzeug 5^{a} bestückt ist, das durch den Drehantrieb M angetrieben wird. Wie ersichtlich, ist das Löseaggregat 5 mittels einer Leitung 6 an eine Vakuumanlage 7 angeschlossen. Durch die Anlage 7 kann das Vakuum in dem Löseaggregat 5 einstellbar auf einem Wert in dem Bereich von z.B. 1 bis 250 mbar gehalten werden. In dem Eindampf- und Löseapparat 5 erfolgt die Bildung der Extrusionslösung, die dann durch die Leitung 8 einer Extrusionseinrichtung 9 zugeführt wird, in der die Lösung zu Fäden versponnen wird, die nach dem Passieren einer Luftstrecke in dem Koagulationsbad 10 koaguliert werden.
In der Leitung 8 wird die Dichte der Lösung durch eine in-line-Messung (DR1) bestimmt. In dem Regler (QRC1) des Prozessleitsystems sind funktionelle Beziehungen (Wassergehalt als Funktion der Dichte) gespeichert, die für jeweils ein Cellulose/Aminoxid-Verhältnis gelten. Aufgrund der Eingabe des Cellulose/Aminxid-Verhältnisses über die Signalleitung 11 und des aus der Dichtemessung (DR1) ermittelten Wassergehalts der Lösung in der Leitung 8 wird unter Berücksichtigung des Soll-Wassergehalts der Lösungszusammensetzung die nötige Veränderung der Stellgröße berechnet, die für die Erreichung des Soll-Wassergehalts und damit der Soll-Zusammensetzung der Lösung erforderlich ist. Der Stellbefehl geht über die Signalleitung 12 des Hauptregelkreises H an den Drehzahlgeber 13 für den Drehantrieb M des Scherwerkzeugs 5^{a}. Alternativ oder ergänzend kann der Regler (QRC1) auch über die Signalleitung 14 den Unterdruckgeber (PRC) und das Ventil 14^{a} des Eindampf- und Löseaggregats 5 betätigen.

Die Lösung des Koagulationsbades 10 wird im Kreislauf gefahren. Ihr Wassergehalt wird über eine in-line-Messung der Dichte (DRC2) und Ausschleusung eines nach der Dichte geregelten Teilstoms über einem vorbestimmten Grenzwert gehalten. Das Faserbündel wird einer Faserwäsche 15 zugeführt, dessen Waschwasser wie dargestellt geregelt erneuert und zur Verdünnung des Koagulationsbades 10 eingesetzt wird. Das ausgeschleuste Koagulationsbad gelangt geregelt in eine Reinigungsstufe 16, in der es von Verunreinigungen befreit wird. Es wird dann in einer z.B. zweistufigen Eindampfanlage 17,18 aufkonzentriert und in die zum Mischaggregat 2 führende Leitung 3 abgegeben. Wie ersichtlich sind in den Ablaufleitungen der Eindampfstufen 17 und 18 Dichtemessgeräte (DRC3) bzw. (DRC4) angeordnet, die die Wärmezufuhr in Form von Wasserdampf zu den Verdampfungsstufen regeln. Die von (DRC4) gemessene Dichte der Aminoxidlösung in der Leitung 3 dient außer zur Einstellung des Cellulose/Aminoxid-Verhältnisses auch als Regelgröße für die Beheizung der Eindampfstufe 18.

## Patentansprüche

1. Verfahren zur Regelung der Zusammensetzung der cellulosehaltigen Extrusionslösung bei der Herstellung cellulosischer Formkörper, bei dem man
(a) Cellulose mit einer wässrigen Aminoxidlösung mischt,
(b) das Gemisch durch Wasserverdampfung unter Vakuum bei erhöhter Temperatur und Eintragung von Scherenergie in die Extrusionslösung überführt,
(c) die Extrusionslösung unter Bildung des cellulosischen Formkörpers extrudiert und in einem Koagulationsbad koaguliert, und
(d) den gebildeten Formkörper zur Entfernung restlichen Aminoxids wäscht,
**dadurch gekennzeichnet, daß** man
in der Stufe (a) das Verhältnis Cellulose/Aminoxid durch eine Vorregelung auf einem vorgegebenen Wert hält, und
den Wassergehalt der Extrusionslösung nach dem Verlassen der Stufe (b) durch eine Hauptregelung auf einem vorgegebenen Wert hält.

2. Verfahren nach Anspruch 1, **dadurch gekennzeichnet, daß** man den Wassergehalt der Extrusionslösung aufgrund einer Messung der Dichte dieser Lösung regelt.

3. Verfahren nach Anspruch 2, **dadurch gekennzeichnet, daß** man die Dichtemessung der Extrusionslösung in-line zwischen den Stufen (b) und (c) durchführt.

4. Verfahren nach einem der Ansprüche 1 bis 3, **dadurch gekennzeichnet, daß** man den Wassergehalt der Extrusionslösung durch die Einstellung der Wasserverdampfungsrate in der Stufe (b) regelt.

5. Verfahren nach Anspruch 4, **dadurch gekennzeichnet, daß** die Wasserverdampfungsrate durch die Eintragsgeschwindigkeit der Scherenergie in der Stufe (b) eingestellt wird.

6. Verfahren nach Anspruch 4 oder 5, **dadurch gekennzeichnet, daß** die Wasserverdampfungsrate durch das Vakuum in der Stufe (b) eingestellt wird.

7. Verfahren nach einem der Ansprüche 1 bis 6, **dadurch gekennzeichnet, daß** man
den Massenstrom und den Wassergehalt der in die Stufe (a) eingeführten Cellulose misst,
den Wassergehalt der in die Stufe (a) eingeführten wässrigen Aminoxidlösung misst, und
den für das vorgesehene Verhältnis Cellulose/Aminoxid erforderlichen Massenstrom der Aminoxidlösung in die Stufe (a) einführt.

8. Verfahren nach Anspruch 7, **dadurch gekennzeichnet, daß** man den Wassergehalt der Aminoxidlösung über ihre Dichte misst.

9. Verfahren nach Anspruch 7 oder 8, **dadurch gekennzeichnet, daß** man die Wassergehalte der Aminoxidlösung und der Cellulose in-line misst.

10. Verfahren nach einem der Ansprüche 1 bis 9, **dadurch gekennzeichnet, daß** man die in Stufe (d) anfallende(n) Waschlösung(en) in dem Koagulationsbad der Stufe (c) einsetzt und die Konzentration dieser Lösung(en) zwischen der Wäsche und dem Koagulationsbad durch die Messung ihrer Dichte regelt.

11. Verfahren nach einem der Ansprüche 1 bis 10, bei dem man wässrige Aminoxidlösung aus dem Koagulationsbad abzieht, reinigt, durch Eindampfen aufkonzentriert und in der Stufe (a) wieder einsetzt, **dadurch gekennzeichnet, daß** man den Massestrom der aus dem Koagulationsbad abgezogenen Lösung durch die Messung ihrer Dichte regelt.

12. Verfahren nach Anspruch 11, **dadurch gekennzeichnet, daß** man die wässrige Aminoxidlösung durch ein- oder mehrstufige Eindampfung konzentiert und die Beheizung der Eindampfstufe(n) über in-line-Messung(en) der Dichte der aus der bzw. den Eindampfstufe(n) ablaufenden Amonoxidlösung(en) regelt.

13. Verfahren nach einem der Ansprüche 1 bis 12, **dadurch gekennzeichnet, daß** man in der Extrusionslösung einen Cellulosegehalt zwischen 1 und 15 Gew.-% und ein Gew.-Verhältnis Aminoxid/Wasser zwischen 6 und 15 einhält.

14. Vorrichtung zur Regelung der Zusammensetzung der cellulosehaltigen Extrusionslösung bei der Herstellung cellulosischer Formkörper nach dem Lyocellverfahren mit
einem Mischaggregat (2) mit einer Beschickungseinrichtung (1) für Cellulose und einer Beschickungsleitung (3) für wasserhaltiges Aminoxid,
einem dem Mischaggregat (2) strömungsmäßig nachgeschalteten Eindampf- und Löseaggregat (5) mit wenigstens einem mit Drehantrieb (M) verbundenem Scherwerkzeug (5^{a}) und einer angeschlossenen Vakuumanlage (7),
einer mit dem Eindampf- und Löseaggregat (5) durch eine Leitung (8) verbundenen Extrusionseinrichtung (9) mit einem Koagulationsbad (10) und wenigstens einem Waschbad (15), und
einer in der Leitung (8) angeordneten Einrichtung zur Überwachung der Extrusionslösung,
**gekennzeichnet durch** einen Vorregelkreis (V) zur Regelung des Cellulose/Aminoxid-Verhältnisses mit einem in der Beschickungsleitung (3) angeordneten Gerät zur Messung der Lösungsdichte (DRC4) als Fühler und einem in der Beschickungsleitung angeordneten Ventil (4) als Stellglied und
einen Hauptregelkreis (H) zur Regelung des Wassergehalts der Extrusionslösung in der Leitung (8) mit einem darin angeordneten Gerät (DR1) zur Messung der Lösungsdichte als Fühler und einem Drehzahlgeber (13) für den Drehantrieb (M) und/oder einen Druckgeber (PRC) und Ventil (14^{a}) der Vakuumanlage (7) als Stellglied.

15. Vorrichtung nach Anspruch 14, **dadurch gekennzeichnet, daß** das Dichtemessgerät des Vorregelkreises (V) zugleich Durchflußregler (FRC4) ist und über Signalleitungen einerseits mit einem Verhältnisregler (RATIO) und andererseits mit einem Ventil (4) in der Beschickungsleitung (3) verbunden ist.

16. Vorrichtung nach Anspruch 15, **dadurch gekennzeichnet, daß** der Verhältnisregler (RATIO) des Vorregelkreises (V) über eine Signalleitung (11) mit dem Regler (QRC1) des Hauptregelkreises (H) verbunden ist.

17. Vorrichtung nach einem der Ansprüche 14 bis 16, **dadurch gekennzeichnet, daß** die Geräte zur Messung der Lösungsdichte und des Massendurchflusses nach dem Coriolis-Prinzip arbeiten.

18. Vorrichtung nach einem der Ansprüche 14 bis 17, dadurhc **gekennzeichnet**, daß die Geräte zur Messung der Lösungsdichte mit einer integierten Temperaturkompensation für die Messungen im Bereich von -10 bis 200°C ausgestattet sind.

## Claims

1. A method of regulating the composition of the cellulose-containing extrusion solution in the production of cellulosic molded articles, whereby
(a) cellulose is mixed with an aqueous amine oxide solution,
(b) the mixture is converted to the extrusion solution by evaporation of water in vacuo at an elevated temperature and by input of shearing energy,
(c) the extrusion solution is extruded, forming the cellulosic molded article, and is coagulated in a coagulation bath, and
(d) the resulting molded article is washed to remove the residual amine oxide,
**characterized in that**
in step (a) the cellulose/amine oxide ratio is kept at a predetermined level by preregulation, and
the water content of the extrusion solution is kept at a predetermined level by a main regulation after leaving step (b).

2. The method according to Claim 1,
**characterized in that**
the water content of the extrusion solution is regulated on the basis of a measurement of the density of this solution.

3. The method according to Claim 2,
**characterized in that**
the density measurement of the extrusion solution is performed in-line between steps (b) and (c).

4. The method according to one of Claims 1 to 3,
**characterized in that**
the water content of the extrusion solution is regulated by adjusting the water evaporation rate in step (b).

5. The method according to Claim 4,
**characterized in that**
the water evaporation rate is adjusted through the rate of input of shearing energy in step (b).

6. The method according to Claim 4 or 5,
**characterized in that**
the water evaporation rate is adjusted through the vacuum in step (b).

7. The method according to one of Claims 1 to 6,
**characterized in that**
the mass flow and the water content of the cellulose introduced into step (a) are measured,
the water content of the aqueous amine oxide solution introduced into step (a) is measured, and
the mass flow of the amine oxide solution required for the intended cellulose/amine oxide ratio is introduced into step (a).

8. The method according to Claim 7,
**characterized in that**
the water content of the amine oxide solution is measured on the basis of its density.

9. The method according to Claim 7 or 8,
**characterized in that**
the water content of the amine oxide solution and the cellulose are measured in-line.

10. The method according to one of Claims 1 to 9,
**characterized in that**
the wash solution(s) occurring in step (d) is/are introduced into the coagulation bath in step (c) and the concentration(s) of these solutions is/are regulated by measuring their density between the washing and the coagulation bath.

11. The method according to one of Claims 1 to 10, whereby aqueous amine oxide solution is removed from the coagulation bath, purified, concentrated by evaporation and returned to step (a),
**characterized in that**
the mass flow of the solution removed from the coagulation bath is regulated by measurement of its density.

12. The method according to Claim 11,
**characterized in that**
the aqueous amine oxide solution is concentrated by one or multistep evaporation, and the heating of the evaporation step(s) is regulated through in-line measurement(s) of the density of the amine oxide solution(s) discharged from the evaporation step(s).

13. The method according to one of Claims 1 to 12,
**characterized in that**
a cellulose content between 1 wt% and 15 wt% and a weight ratio of amine oxide to water between 6 and 15 are maintained in the extrusion solution.

14. A device for regulating the composition of the cellulose-containing extrusion solution in the production of cellulosic molded articles by the lyocell process, having
a mixing apparatus (2) with a feed device (1) for cellulose and a feeder line (3) for aqueous amine oxide,
an evaporation and dissolving unit (5) connected downstream from the mixing apparatus (2), with at least one shearing tool (5^{a}) connected to a rotational drive (M) and a connected vacuum system (7),
an extrusion apparatus (9) connected to the evaporation and dissolving unit (5) by a line (8) and having a coagulation bath (10) and at least one wash bath (15), and
a device arranged in the line (8) for monitoring the extrusion solution,
**characterized by** a preregulating circuit (V) for regulating the cellulose/amine oxide ratio with a device arranged in the feeder line (3) for measuring the density of the solution (DRC4) as a sensor and a valve (4) arranged in the feeder line as a controlling element, and
a main regulation circuit (H) for regulating the water content of the extrusion solution in the line (8) with a device (DR1) arranged in it for measuring the solution density as a sensor and a rotational speed sensor (13) for the rotational drive (M) and/or a pressure sensor (PRC) and a valve (14^{a}) of the vacuum system (7) as a controlling element.

15. The device according to Claim 14,
**characterized in that**
the density measurement device of the preregulation circuit (V) is also the flow regulator (FRC4) and is connected over signal lines to a ratio regulator (RATIO) on the one hand and to a valve (4) in the feeder line (3) on the other hand.

16. The device according to Claim 15,
**characterized in that**
the ratio regulator (RATIO) of the preregulation circuit (V) is connected over a signal line (11) to the regulator (QRC1) of the main regulation circuit (H).

17. The device according to one of Claims 14 to 16,
**characterized in that**
the devices for measuring the density of the solution and the mass flow rate operate according to the Coriolis principle.

18. The device according to one of Claims 14 to 17,
**characterized in that**
the devices for measuring the density of the solution are equipped with an integrated temperature compensation for the measurements in the range of -10 °C to 200 °C.

## Revendications

1. Procédé pour la régulation de la composition de la solution d'extrusion contenant de la cellulose lors de la fabrication de pièces de forme cellulosiques, au cours duquel
(a) de la cellulose est mélangée avec une solution aqueuse d'oxyde d'amine,
(b) le mélange est transformé en la solution d'extrusion par vaporisation d'eau sous vide à haute température et apport d'énergie de cisaillement,
(c) la solution d'extrusion est extrudée avec formation de la pièce de forme cellulosique et se coagule dans un bain de coagulation, et
(d) la pièce de forme formée est lavée pour éliminer l'oxyde d'amine restant,
**caractérisé en ce que**
dans l'étape (a), la proportion cellulose / oxyde d'amine est maintenue à une valeur donnée grâce à une pré-régulation, et
**en ce que** la teneur en eau de la solution d'extrusion après la sortie de l'étape (b) est maintenue à une valeur donnée grâce à une régulation principale.

2. Procédé selon la revendication 1, **caractérisé en ce que** la teneur en eau de la solution d'extrusion est régulée sur la base d'une mesure de la densité de cette solution.

3. Procédé selon la revendication 2, **caractérisé en ce que** la mesure de la densité de la solution d'extrusion est réalisée en ligne entre les étapes (b) et (c).

4. Procédé selon l'une des revendications 1 à 3, **caractérisé en ce que** la teneur en eau de la solution d'extrusion est régulée par l'ajustement du taux de vaporisation d'eau à l'étape (b).

5. Procédé selon la revendication 4, **caractérisé en ce que** le taux de vaporisation d'eau est ajusté par la vitesse d'apport de l'énergie de cisaillement à l'étape (b).

6. Procédé selon la revendication 4 ou 5, **caractérisé en ce que** le taux de vaporisation d'eau est ajusté par le vide à l'étape (b).

7. Procédé selon l'une des revendications 1 à 6, **caractérisé en ce que**
le débit massique et la teneur en eau de la cellulose introduite à l'étape (a) sont mesurés,
la teneur en eau de la solution aqueuse d'oxyde d'amine introduite à l'étape (a) est mesurée, et
le débit massique de la solution d'oxyde d'amine nécessaire pour la proportion cellulose / oxyde d'amine prévue est apporté à l'étape (a).

8. Procédé selon la revendication 7, **caractérisé en ce que** la teneur en eau de la solution d'oxyde d'amine est mesurée par l'intermédiaire de sa densité.

9. Procédé selon la revendication 7 ou 8, **caractérisé en ce que** les teneurs en eau de la solution d'oxyde d'amine et de la cellulose sont mesurées en ligne.

10. Procédé selon l'une des revendications 1 à 9, **caractérisé en ce que** la ou les solutions de lavage nécessaires à l'étape (d) sont introduites dans le bain de coagulation de l'étape (c) et **en ce que** la concentration de cette ou de ces solutions est régulée par la mesure de sa ou de leur densité entre le lavage et le bain de coagulation.

11. Procédé selon l'une des revendications 1 à 10, dans lequel de la solution aqueuse d'oxyde d'amine est retirée du bain de coagulation, nettoyée, concentrée par évaporation et réutilisée dans l'étape (a), **caractérisé en ce que** le débit massique de la solution retirée du bain de coagulation est régulé par la mesure de sa densité.

12. Procédé selon la revendication 11, **caractérisé en ce que** la solution aqueuse d'oxyde d'amine est concentrée par évaporation en un ou plusieurs étages et **en ce que** le chauffage du ou des étages d'évaporation est régulé à l'aide d'une ou de mesures en ligne de la densité de la ou des solutions d'oxyde d'amine sortant du ou des étages d'évaporation.

13. Procédé selon l'une des revendications 1 à 12, **caractérisé en ce que** le taux de cellulose de la solution d'extrusion est maintenu entre 1 et 15 % en poids, et **en ce que** le rapport de poids oxyde d'amine / eau est maintenu entre 6 et 15.

14. Dispositif pour la régulation de la composition de la solution d'extrusion contenant de la cellulose lors de la fabrication de pièces de forme cellulosiques selon le procédé Lyocéll, avec
un mélangeur (2) avec un dispositif d'alimentation (1) pour la cellulose et une conduite d'alimentation (3) pour l'oxyde d'amine aqueux,
un appareil de vaporisation et de dissolution (5) disposé en aval du mélangeur (2) et muni d'au moins un outil de cisaillement (5^{a}) relié à un moteur de rotation (M) et d'une installation de vide (7) raccordée à l'appareil,
une installation d'extrusion (9) reliée par une conduite (8) à l'appareil de vaporisation et de dissolution (5), avec un bain de coagulation (10) et au moins un bain de lavage (15), et
un dispositif de surveillance de la solution d'extrusion disposé dans la conduite (8),
**caractérisé par** un circuit de pré-régulation (V) pour la régulation de la proportion cellulose / oxyde d'amine, muni d'un appareil de mesure de la densité de la solution (DRC4) disposé dans la conduite d'alimentation (3), faisant office de sonde, et d'une vanne (4) faisant office d'organe de régulation disposée dans la conduite d'alimentation, et
par un circuit de régulation principal (H) pour la régulation de la teneur en eau de la solution d'extrusion dans la conduite (8), avec un appareil (DR1) disposé dans celle-ci, pour la mesure de la densité de la solution, faisant office de sonde, et un transmetteur de vitesse (13) pour le moteur de rotation (M) et/ou un capteur de pression (PRC) et une vanne (14^{a}) de l'installation de vide (7), faisant office d'organe de régulation.

15. Dispositif selon la revendication 14, **caractérisé en ce que** l'appareil de mesure de la densité du circuit de pré-régulation (V) est en même temps un régulateur de débit (FRC4) et est relié par des lignes de signal d'une part à un régulateur de proportion (RATIO) et d'autre part à une vanne (4) disposée dans la conduite d'alimentation (3).

16. Dispositif selon la revendication 15, **caractérisé en ce que** le régulateur de proportion (RATIO) du circuit de pré-régulation (V) est relié par une ligne de signal (11) au régulateur (QRC1) du circuit de régulation principal (H).

17. Dispositif selon l'une des revendications 14 à 16, **caractérisé en ce que** les appareils de mesure de la densité de la solution et du débit massique fonctionnent suivant le principe de Coriolis.

18. Dispositif selon l'une des revendications 14 à 17, **caractérisé en ce que** les appareils de mesure de la densité de la solution sont équipés d'une compensation de température intégrée pour des mesures dans la plage de -10 à 200 °C.
